# EUROPEAN PATENT APPLICATION

(11) **EP 2 541 967 A1**
(43) Date of publication of application: **02.01.2013**
(21) Application number: 11171811.0
(22) Date of filing: 28.06.2011
(51) Int. Cl.: H04Q 1/10

(54) **Systems and methods for locking and sealing telecommunications enclosures using a coin lock system**

(71) Applicant: Tyco Electronics Raychem BVBA, 3010 Kessel-Lo (BE)
(72) Inventor: Diepstraten, Patrick Jacques Ann, 3550 Heusden-Zolder (BE); Van De Weyer, Dirk Jozef G, 3582 Beringen (BE); Vastmans, Kristof, 3370 Boutersen (BE)
(74) Representative: Bressel, Burkhard

(57) **Abstract**

The invention relates to a telecommunications enclosure 1 which comprises a base 2, a moveable cover 3, and an actuator 100. The base 2 and the cover 3 define an enclosed interior 4, wherein the cover 3 is moveable to access the interior 4 of the enclosure 1. The actuator 100 comprises a locking device 120 or the cover 3 comprises the locking device 120 for locking the actuator 100 in an actuating position A1. The actuator 100 is moveable between the actuating position A1 and a non-actuating position A2. The actuator 100 locks the cover 3 in a closed position, when it is in its actuating position A1. The locking device 120 includes a lock housing 130 having an opening for insertion 140 of a valuable article B to the lock housing 130 and a receiving seat 150 for accommodating the valuable article B. The receiving seat 150 is moveable between an unlocking position P2 in which the valuable article B is in an insertion position V2 and a locking position P1 in which the valuable article B is in an ejection position V1. The lock housing 130 is engageable with a catch member 160 to fasten the actuator 100 in the actuating position A1 while the receiving seat 150 is in the locking position P1.

## Description

### Field of the Invention

The present invention relates to systems and methods for locking and sealing telecommunications enclosures.

### Background of the Invention

Enclosures are known for managing telecommunications cables and connectivity equipment, including splices, splitters, wave division multiplexers, and termination. The enclosures may be mounted outside and include movable covers for accessing an interior of the enclosures.

### Problem relating to the Invention

There is a need for maintaining the covers in the closed positions to prevent humidity, dust, and other contaminants from entering into the enclosures. It has emerged that persons in charge of opening the interior may inadvertently fail to securely close the enclosure after any operation has been terminated and simply forget to safely close the enclosure.

### Summary of the Invention

To solve the above need, a telecommunications enclosure, a cable sealing arrangement for providing a seal of a telecommunications enclosure in a closed position, and methods of locking and unlocking the cable sealing arrangement of the telecommunications enclosure are provided.

An object of the invention is to provide a telecommunications enclosure. The telecommunications enclosure of the invention comprises a base and a moveable cover. The base and the cover define an enclosed interior, wherein the cover is moveable to access the interior. The telecommunications enclosure further comprises an actuator. The actuator is moveable between an actuating position and a non-actuating position. When the actuator in its actuating position it locks the cover in a closed position und further preferably causes a cable sealing arrangement located in the enclosure to seal the enclosure and when it is in its non-actuating position, the cover is unlocked and may be opened so that the open cover allows access to the interior of the enclosure. In addition in this position a cable sealing arrangement present in the enclosure would be released so that it no longer seals the enclosure. The actuator or the cover comprises a locking device for locking the actuator in the actuating position. The locking device may for example be mounted to the actuator, at one end thereof preferably, or to (or in) the cover. The locking device preferably engages with a catch member as a counterpart. The catch member may preferably be connected to the cover if the locking device is comprised by the actuator or may preferably be connected to the actuator if the locking device is comprised by the cover.

To solve the problem of failing to securely re-lock the enclosure after its cover was in an open position, the locking device includes a lock housing which has an opening for insertion of a valuable article to the lock housing and further includes a receiving seat for accommodating the valuable article when it is inserted via the opening to the lock housing. The lock housing may be part of the cover of the enclosure if the locking device is comprised by the cover. In this case the cover has the opening for insertion of the valuable article. Thus, the valuable article may either be inserted (in)to the actuator if the locking device is comprised by the actuator or it may be inserted (in)to the cover if the locking device is comprised by the cover. The lock housing is characterized in that it encompasses an interior region and accommodates various parts of the locking device. The receiving seat is moveable between an unlocking position in which the valuable article is in an insertion position, i.e., in a position which allows or causes unlocking of the locking device when the valuable article has been inserted to the housing, and a locking position in which the valuable article is in an ejection position, i.e., in a position which causes or results from locking the locking device and from which it may be gripped by hand to be removed from the locking device or is ejected from the lock housing. To lock the locking device, the lock housing is furthermore engageable with a catch member to fasten the actuator in the actuating position. In this position of the locking device and actuator the receiving seat is in the locking position. If however, the catch member is disengaged from the lock housing the actuator is unlocked and may be moved to the non-actuating position. In the non-actuating position of the actuator the receiving seat is in the unlocking position and the valuable article is held by the receiving seat in its insertion position.

The insertion position is defined as follows: The valuable article is inserted to the locking device and causes the locking device to be unlocked. For this purpose, the valuable article being in this position abuts the bearing at the lock housing, a border of an opening for example, to which the catch member engages, or it slightly protrudes this bearing when being in this position. Thus, when the valuable article is moved to the insertion position, it will be able to disengage the catch member, for example by deflecting it to a disengaging position, and thus will unlock the locking device.

A further object of the invention is to provide a cable sealing arrangement. The cable sealing arrangement of the invention allows for providing a seal of a telecommunications enclosure in a closed position. For this purpose the cable sealing arrangement is mounted to the telecommunications enclosure. The cable sealing arrangement comprises an actuator and a cable sealing device. In one embodiment the actuator comprises a locking device. In this case the cover of the enclosure or another part of the enclosure may comprise a catch member. In another embodiment the cover of the enclosure comprises the locking device. In this case the actuator may comprise the catch member. The actuator may further include a cam lever. The locking device may be comprised by the actuator and may preferably be mounted to one of its ends or it is comprised by the cover. The actuator is connected to the cable sealing device. In its actuating position the actuator is fastened by the locking device and locks, in this position, the enclosure in a closed position and the cable sealing device is caused to seal the enclosure. If the actuator of the cable sealing device does not include the locking device, the locking device may be comprised by the cover of the enclosure.

To solve the problem of failing to securely re-lock the enclosure after its cover had been in an open position, the locking device includes a lock housing which has an opening for insertion of the valuable article to the lock housing and the locking device further includes a receiving seat for accommodating the valuable article at or in the housing. The receiving seat is moveable between an unlocking position in which the valuable article is in an insertion position and a locking position in which the valuable article is in an ejection position. The lock housing is engageable with a catch member to lock the actuator in the actuating position while the receiving seat is in the locking position. In order to unlock the actuator the catch member is disengaged from the locking device and accordingly, the actuator may then be moved to the non-actuating position while the receiving seat is in the unlocking position. When the actuator is unlocked the valuable article is ejected from the locking device.

A further object of the invention is to provide a method of locking the cable sealing arrangement of the telecommunications enclosure. To this end the actuator is moveable between the actuating position and the non-actuating position. The actuator in its actuating position then locks the cover in a closed position and causes the cable sealing arrangement to seal the enclosure. For closing the cover in the closed position and causing the cable sealing arrangement to seal the enclosure the actuator is moved from the non-actuating position to the actuating position. For locking the actuator in the actuating position, the actuator is first snapped on the cover of the enclosure. Accordingly the catch member is moved from its non-engaged position to its engaged position and accordingly the locking device is moved from its non-locked position to its locked position. Thereafter or simultaneously the valuable article is moved from its insertion position to its ejection position. The catch member may cause moving of the valuable article from the insertion position to the ejection position. Accordingly the receiving seat is moved from its unlocking position to its locking position. In a further subsequent or simultaneous step the valuable article is ejected from the locking device. Therefore a person operating at the enclosure may finally seize and recover the valuable article once the enclosure is firmly closed and locked.

A further object of the invention is to provide a method of unlocking the cable sealing arrangement of the telecommunications enclosure. To this end, for opening the enclosure and releasing the cable sealing arrangement, the actuator has to be unlocked and then be moved from the actuating position to the non-actuating position. For this to occur, the actuator has first to be unlocked when being in the actuating position. For unlocking the actuator, the valuable article is first inserted to the locking device. In a further subsequent or simultaneous step the receiving seat is moved from the locking position to the unlocking position by moving the valuable article from an ejection position to an insertion position. In a further step, the catch member is moved from an engaged position to a non-engaged position. This movement may be caused by the valuable article as it is moved to the insertion position directly or indirectly via any other means. The locking device and accordingly the actuator are consequently unlocked either directly by means of the valuable article being moved to the insertion position or indirectly by any other means which other means is moved by the valuable article.

Telecommunications systems typically employ a network of telecommunications cables capable of transmitting large volumes of data and voice signals over relatively long distances. The telecommunications cables can include fiber optic cables, electrical cables, or combinations of electrical and fiber optic cables. A typical telecommunications network also includes a plurality of the telecommunications enclosures of the invention which are integrated throughout the network of telecommunications cables. The telecommunications enclosures are adapted to house and protect telecommunications components such as splices, termination panels, power splitters, and wavelength division multiplexers. The telecommunications enclosure is to be re-enterable, i.e., the telecommunications enclosure can be reopened to allow access to the telecommunications components housed therein without requiring the removal and destruction of the telecommunications enclosure.

The telecommunications enclosure of the invention allows a person leaving the installation site only after the cover of the enclosure has securely been closed by locking the actuator. This is because the person may unlock the actuator and accordingly the cover of the enclosure only if he or she has provided the valuable article, which may be a personal item for example, and has inserted the valuable article to the locking device of the enclosure and will regain his or her valuable article only when the actuator and hence the cover of the enclosure and the cable sealing arrangement have securely been re-locked. As the person will be interested in getting his or her valuable article back, he or she will not fail locking the enclosure. Therefore the invention ensures that the enclosure is securely closed after any opening has occurred and humidity, dust, and other contaminants are therefore completely prevented from entering into the enclosure. Therefore, the enclosure of the invention operates according to an open/close (go/nogo) trigger principle.

In a preferred embodiment of the invention the receiving seat includes at least one holding member which is formed to at least partially embrace the valuable article once it is inserted to the lock housing. The receiving seat is mounted, preferably pivotally mounted, to be moveable between the unlocking position and the locking position. This embodiment makes possible a very easy construction of the locking device comprising only a few parts so that production and assembly thereof are cost-effective.

In a further preferred embodiment of the invention the receiving seat includes two holding members which each engage the lock housing while pivoting to move the valuable article between the insertion position and the ejection position. By providing just two holding elements a symmetrical configuration of the locking device may be provided so that easy operation for the insertion step of the valuable article is allowed for.

In a further preferred embodiment of the invention the holding members are plates which are formed to fit to at least part of the border of the valuable article. Furthermore it is favorable to provide each holding member with a bump which engages with a respective side wall of the lock housing while the holding members are caused to move pivotally. This embodiment makes distinct positions of the receiving seat possible which are attained automatically through the use thereof because the receiving seat clicks in each of two positions in place. This is achieved by the bumps of the holding members engaging with the respective side wall, preferably by friction. The valuable article accordingly either moves to the insertion position or to the ejection position and rests there. Any intermediate positions are not available to the valuable article. If the valuable article is in the insertion position it cannot inadvertently move to the ejection position and be ejected from the locking device, because the holding members retain it in the insertion position. The person can accordingly not take the valuable article out of the locking device as long as the enclosure is not closed and the locking device is not moved to the locking position.

In a further preferred embodiment of the invention the lock housing further comprises at least one positive stop which prevents the valuable article from being inserted to the lock housing beyond a predetermined depth. This stop thus allows the valuable article to be located in the locking device at a predetermined position as long as the locking device is in an unlocked position and the actuator is in a non-actuating position. Due to this stop re-locking of the locking device is more easily performed as the valuable article is prevented from interfering with the catch-and-lock locking mechanism of the invention.

In a further preferred embodiment of the invention the catch member is moveable between a biased position and a non-biased position. In this embodiment the catch member engages the lock housing when it is in the non-biased position. Furthermore, the catch member in this embodiment is moveable to the biased position by inserting the valuable article to the lock housing and moving the catch member by means of the valuable article to the biased position so that it may be disengaged from the locking device. When the catch member is moved from the engaged position to the non-engaged position it will be biased. This bias may furthermore be used to force the valuable article being in the insertion position to be moved to the ejection position. No further steps or means are required to achieve this.

In a further preferred embodiment of the invention the valuable article may be any one of a coin, a credit card or other value or security or identity card or a batch or a key any other item which is valuable and which the person on the installation site is very much interested in regaining.

In a further preferred embodiment of the invention the cam lever of the actuator is pivotally moveable to move the actuator between the actuating position and the non-actuating position and wherein the actuator in its actuating position locks the cover in the closed position and furthermore may cause the cable sealing arrangement to seal the enclosure.

This makes an easy closing and opening operation of the enclosure possible because two actions are combined at the same time: By simply pivoting the cam lever over the cover of the enclosure any gel sealing is activated to seal the enclosure and the enclosure is at the same time locked. Furthermore, pivoting of the actuator is an obviously visible operation whose failure, due to inadvertent forgetting for example, would be easily observable.

In a further embodiment of the invention the enclosure further comprises at least one latch, preferably two latches, each one on one of opposing lateral side regions of the cover for example, the at least one latch physically overlapping the cover to lock the cover in a closed position. The actuator, the locking device of the actuator for example if the locking device is comprised by the actuator, physically overlaps the at least one latch to lock the at least one latch in a closed position. For this purpose the at least one latch may be hinged at the base of the enclosure and be pivotally moveable over the cover if the cover is closed. There may be two latches for example, one first latch overlapping over one first lateral side region of the cover and one second latch overlapping over at one second lateral side region of the cover.

To open the enclosure when it is in a closed and locked position and the actuator is in a locked and actuating position, the following method steps are preferably performed: The actuator is first unlocked. Then it is moved to its non-actuating position. Then the at least one latch is moved to its open position. And only when the at least one latch is moved to its open position the cover is finally moved to its open position so that the enclosure is in its open and unlocked position.

To close and lock the enclosure when it is in an open position and the actuator is in a non-actuating position, the following method steps are preferably performed: The cover is moved to its closed position so that the enclosure is in the closed position. Then the at least one latch is moved to its closed position. Only when the at least one latch is moved to its closed position, the actuator can then be moved to its actuating position. And finally the actuator is locked.

In a further preferred embodiment of the invention the telecommunications enclosure of the invention further comprises a cable sealing device including a cable sealant which is compressible such that the cable sealant upon compression thereof is adapted to form a seal about a cable routed through the cable sealant. The cable sealant is preferably in a compressed position when the actuator is in the actuating position and is in a non-compressed position when the actuator is in the non-actuating position. The cable sealing device seals the interior of the telecommunications enclosure to the environment and accordingly prevents humidity, dust, and other contaminants from intruding into the interior. As the cables may have different diameters and as the enclosure shall be designed to accommodate cables whose diameters are not known at the time of the construction of the enclosure, the cable passages provided to route the cables there through must be variable in size and at the same time seal the enclosure hermetically to humidity, dust or any other contaminants. This is accomplished by the cable sealing device of the invention.

In enclosures for which the sealing grade is rated IP67/68 according to the Standard DIN 40 050, the sealant material is typically a TPE (thermoplastic elastomer) or Sil gel material (silicone dry gel) or any other appropriate material. A spring may be used to keep the material under pressure around the cables. Such spring is used to cope with a range of cable diameters.

In a further preferred embodiment of the invention the cable sealant is positioned between first and second compression plates, which are compressed together to deform the cable sealant while the actuator is in the actuating position. This construction exerts a uniform pressure to the cable sealant so that all cable passages containing cables routing there through or even containing no cable will be sealed securely.

In a further preferred embodiment of the invention the actuator further comprises a cam lever which is moveable so that the actuator is moved between the actuating position and the non-actuating position. The cam lever is pivotally mounted to an axially moveable piston block and is adapted to apply a load to the piston block which in turn compresses the first and second compression plates together while the actuator is in the actuating position. Hence, compression of the cable sealant may be achieved by the actuator of the invention. By locking the actuator in accordance with the invention sealing is securely accomplished.

In a further preferred embodiment of the invention the cam lever acts on a spring for transferring a load from the cam lever to the first and second compression plates. In this embodiment in the non-actuating position of the actuator, the cable sealant is therefore kept under a spring load resulting in providing mechanical stability to the cable sealing device.

The following Figures explain the invention in more detail. These Figures exclusively serve the understanding and do not limit the scope of the invention as claimed.
- Figure 1: is a front perspective view of a telecommunications enclosure in accordance with the principles of the present invention with the actuator being moved to the non-actuating position and with the cover of the enclosure being closed;
- Figure 2: is a rear perspective view of the telecommunications enclosure of Figure 1 with the actuator being moved to the actuating position;
- Figure 3: is a cross-sectional view of the telecommunications enclosure of Figure 2;
- Figure 4: is a front perspective view of the telecommunications enclosure of Figure 1, however showing the cover of the enclosure in the open position and one of the cable sealants being folded up;
- Figure 5: is a front perspective view of the telecommunications enclosure of Figure 1, however showing the cover of the enclosure in the open position and part of the cable sealants being removed and a platform for the cables being in an upper position;
- Figure 6: is a front perspective view of the cable sealing arrangement in accordance with the principles of the present invention with the actuator being moved to the non-actuating position;
- Figure 7: is an exploded view of the cable sealing arrangement of Figure 6;
- Figure 8: is a cross-sectional view of the cable sealing arrangement in accordance with the principles of the present invention with the actuator being moved to the actuating position;
- Figure 9: is a cross-sectional view of the cable sealing arrangement of Figure 7;
- Figure 10: are perspective views of the locking device as being part of the enclosure in accordance with the principles of the present invention, with views to the interior region of the lock housing, (a) in the locked position, (b) in the unlocked position;
- Figure 11: are perspective views of the actuator in accordance with the principles of the present invention, (a) with a coin to be inserted into the lock housing, (b) with the coin while being inserted into the lock housing, with the mounting plate being removed, (c) with the coin being in the insertion position, with the mounting plate being removed, (d) same as (c), with the mounting plate not being removed;
- Figure 12: is a perspective view of the telecommunications enclosure in accordance with the principles of the present invention with the actuator being moved to the actuating position;
- Figure 13: is a top perspective view of the telecommunications enclosure in accordance with the principles of the present invention with the cover and latches being opened;
- Figure 14: is a cross-sectional view of the lock housing being part of and integrated into the cover of the telecommunications enclosure.

Elements having the same function are designated with the same reference signs in the Figures.

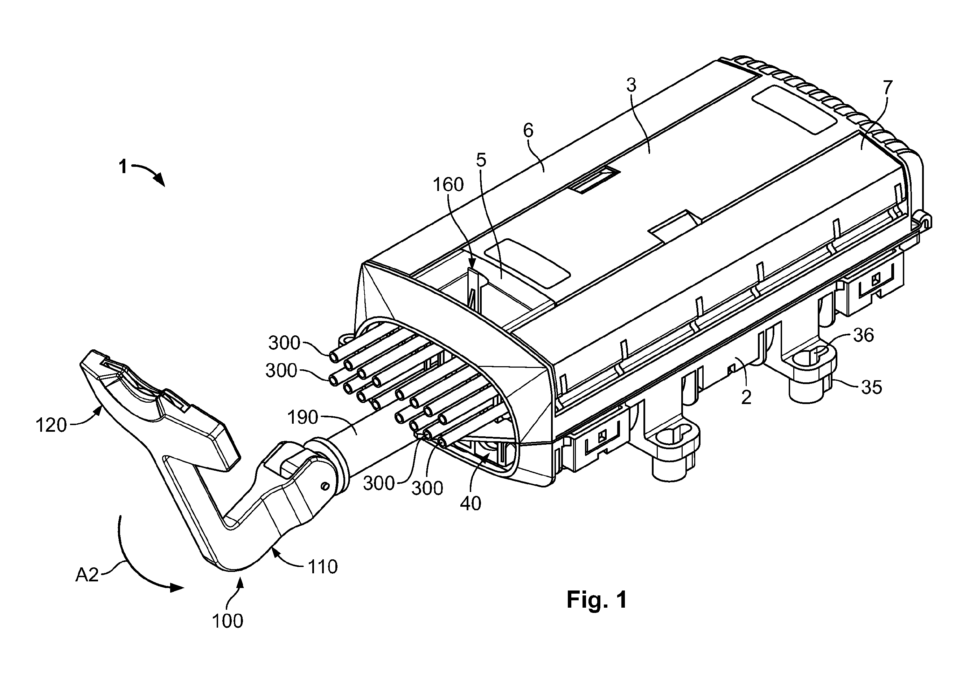

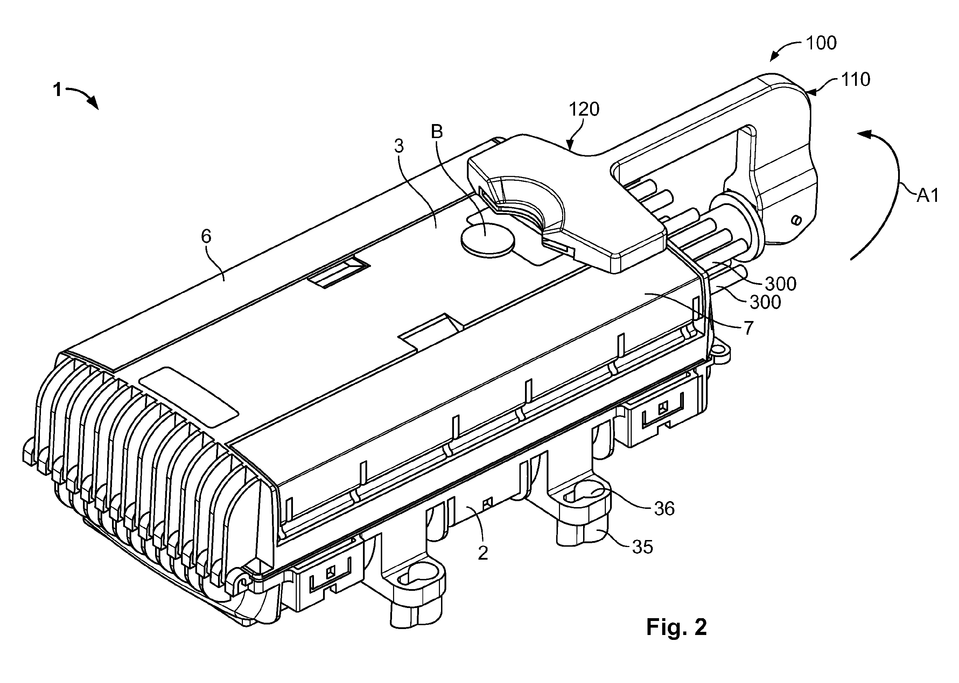

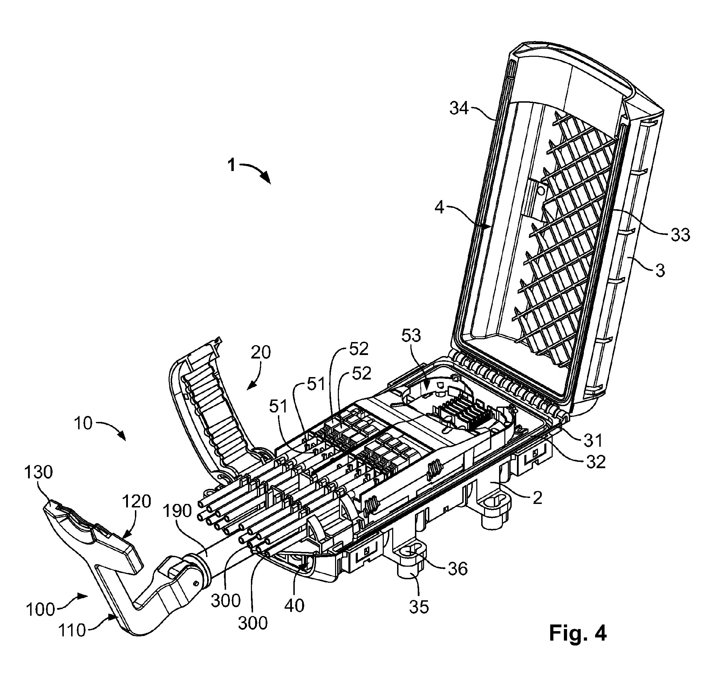

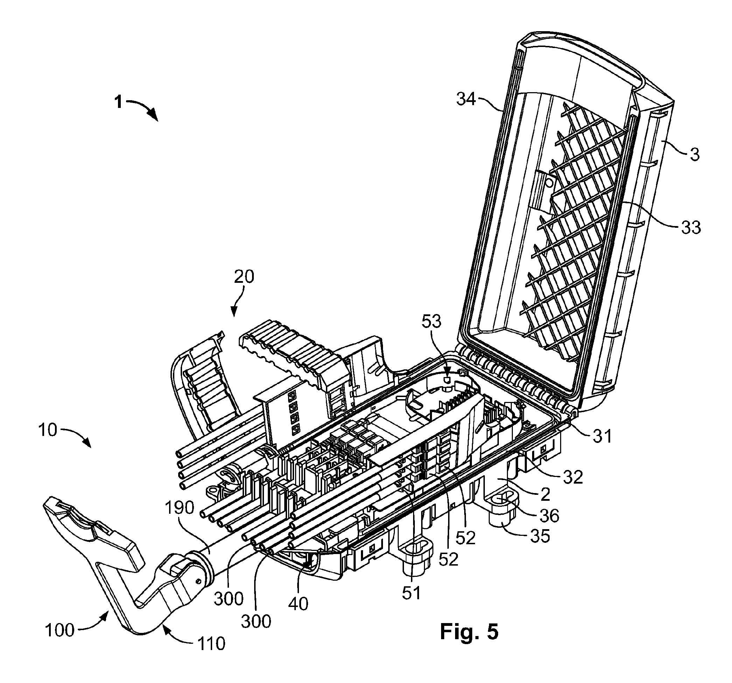

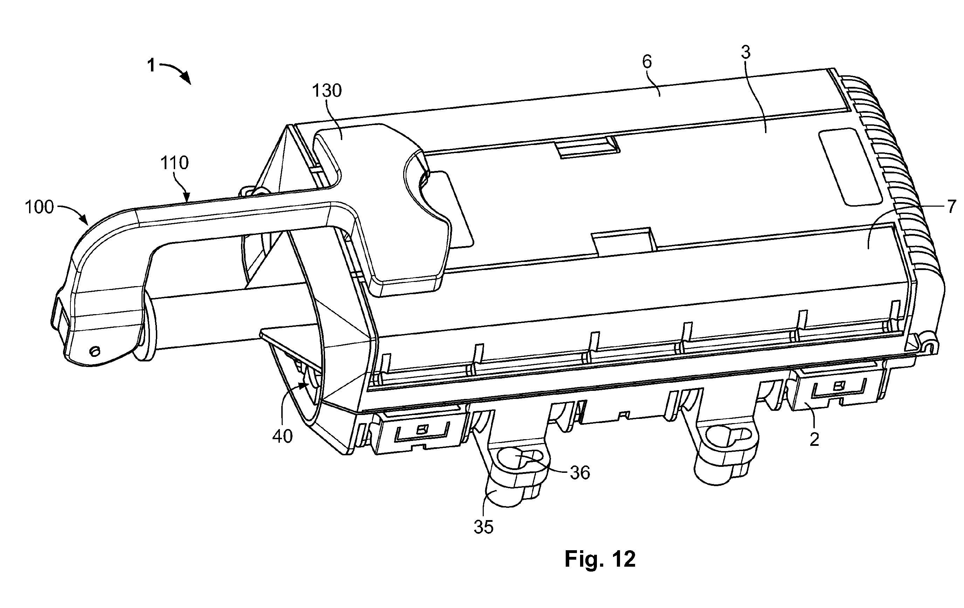

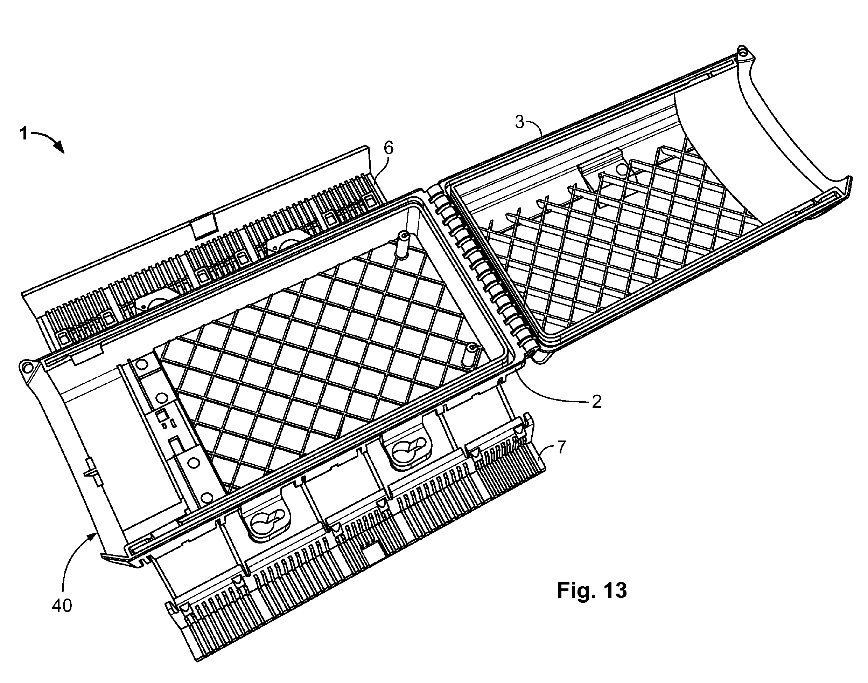

Figures 1-5, 12 and 13 show the telecommunications enclosure 1 of the invention. The enclosure 1 comprises a base 2 and a cover 3 both being moveably hinged to the upper small rear rim section of the base 2. The base 2 is provided with a U-shaped groove 32 at three upper rim sections 31, namely the upper small rear rim section and the two lateral upper long rim sections adjacent the upper rear rim section. A sealing material is provided in this groove 32, a silicone dry gel material or any other appropriate material for example. A protruding ridge 34 is provided at three lower rim sections 33 of the cover 3, which enter into the groove 32 when the cover 3 is in a closed state to provide a seal along the joint between the base 2 and the cover 3. When being closed the cover 3 is held in place by two latches 6, 7 which are hinged to the base 2 and which overlap with the lateral sides of the cover 3 so that the cover cannot be opened as long as the latches 6, 7 are folded over the lateral long sides of the cover 3. Fig. 12 shows the enclosure 1 being in the closed state with the actuator 100 being locked and the latches 6, 7 physically overlapping the cover 3 at its lateral long sides. Fig. 13 shows the latches 6, 7 being pivoted outwardly and the cover 3 being opened. This construction forces a person operating at the enclosure 1 to follow the correct sequence of opening and closing the enclosure 1. To open the enclosure 1 the person must first unlock the actuator 100. Only when the actuator 100 has been unlocked and moved to the non-actuated position A2 the latches 6, 7 can be opened. This is because the actuator 100 physically overlaps the latches 6, 7 and keeps them shut. Thereafter the cover 3 can be opened. For closing the enclosure 1, the person must, after having closed the cover 3, pivot the latches 6, 7 over the cover 3. Only after the latches 6, 7 have been closed over the cover 3, the actuator 100 can be moved to the actuated position A1 and can then be locked. The latches 6, 7 are not shown in Figures 4 and 5.

The base 2 further comprises tabs 35 with holes 36 for mounting the enclosure 1 to a pole or wall structure.

The base 2 and the cover 3 as well as other components of the enclosure, like hinge parts, may be formed from a plastics material, a thermoplastics material, and may be manufactured by injection molding for example. Or part thereof or all these parts may be made from metal. Likewise all other parts of the enclosure which do not require to have a specific soft property like the sealant members (see below), such as the cam lever, the locking device, the spring housing, and the piston block, may also be made from a plastics material, a thermoplastics material for example, and may be manufactured by injection molding, or all of them or only part of them may be made from metal.

In the closed state the base 2 and the cover 3 of the enclosure 1 define an opening 40 which is located at the small side of the enclosure 1 opposite to the small rear rim section. It will be described below that a cable sealing device 20 will be arranged in this opening 40 to allow cables 300 routing there through.

The base 2 further accommodates cable holders 51 and fiber optic adapters 52 for receiving connectorized ends of the cables 300 as well as a splice section 53. Examples of fiber optic adapters 52 are for example disclosed in U.S. Patent Nos. 5,883,995 and 5,317,663. Furthermore, the base 2 accommodates the cable sealing device 20.

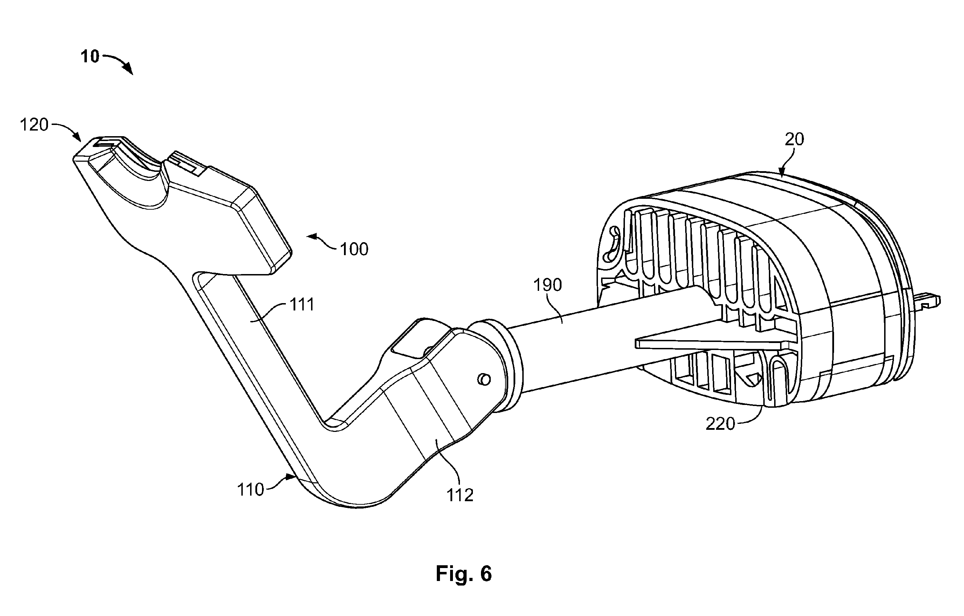

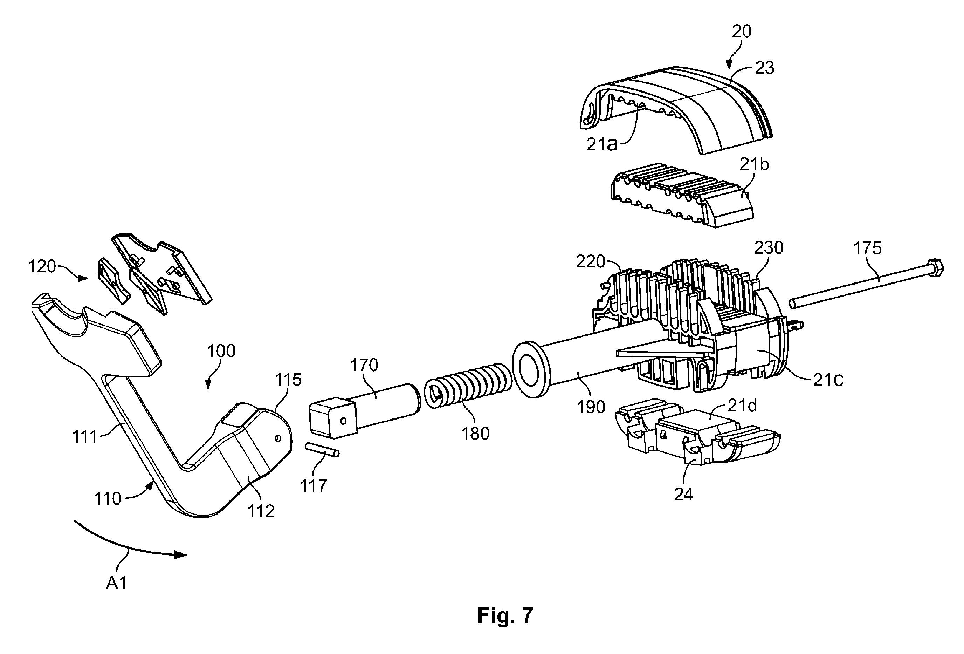

Figure 6 shows the cable sealing arrangement 10 in a perspective view and Figure 7 shows the cable sealing arrangement 10 in an exploded view.

The cable sealing arrangement 10 comprises the cable sealing device 20, the actuator 100, and further components (see below). The cable sealing device 20 comprises two compression plates 220, 230 which are arranged parallel to each other and movable in a direction perpendicularly to their plane. The compression plates 220, 230 are configured to have upright and downright lamellae which expose clearances between them, wherein the lamellae having their base on a horizontal carrier member. Cables 300 may be routed through these clearances. The compression plates 220, 230 are made of a rigid material, like a plastics material, to be able to exert a two-dimensional force to the cable sealants 21 a, 21 b, 21 c, 21 d.

The cable sealants are located between the compression plates 220, 230. These sealants are composed of cable sealant members 21 a, 21 b, 21 c, 21 d, namely an uppermost cover cable sealant member 21 a, an upper central cable sealant member 21 b, a lower central cable sealant member 21 c, and a lowermost cover sealant member 21d. The cable sealant members 21 a, 21 b, 21 c, 21d are seized between a top part perimeter casing 23 and a bottom part perimeter casing 24. The top part perimeter casing 23 and the bottom part perimeter casing 24 form a perimeter housing. The top part perimeter casing 23 contains the uppermost seal 21a and the bottom part perimeter casing 24 contains the lowermost seal 21 d. The cable sealant members 21 a, 21 b, 21 c, 21 d are configured to have notches thereby forming cable passages 22 in the assembled state which pass in a horizontal direction through the sealant members block, which is formed by the sealant members, to allow the cables 300 to be routed there through. The top piece 23 of the perimeter housing is pivotally connected to the compression pates 220, 230. By pivoting open the top piece 23 of the perimeter housing, the sealing functions as a wrap around seal for facilitating inserting cables 300 within the sealing device 20 and also allows the top trays to be pivoted open without interference from the cable sealing device 20. The sealant members 21 a, 21 b, 21 c, 21 d may be formed of any one or more of a variety of sealing materials, i.e., elastomers, including natural or synthetic rubbers, like EPDM rubber or silicone rubber or any other appropriate material. In other embodiments, polymeric foam such as silicone foam can be used. In yet other embodiments, the sealant members may comprise gel and/or gel combined with another material such as an elastomer. The top piece 23 and the bottom 24 are made of plastic.

The front (first) compression plate 220 is made integral (both parts being made of one piece) with a spring housing 190 which accommodates a spring 180. Furthermore, a piston block 170 slides in the spring housing 190 confining the space of the spring 180 and transmitting the load of the spring 180. The piston block 170 has an axial screw thread at the end thereof which is oriented towards the interior of the spring housing 190 in order to be connected with an axial bolt 175. This bolt 175 passes centrally through the spring housing 190 and axially passes through the cable sealing device 20. This bolt 175 forms a bearing at the rear (second) compression plate 230. The spring 180 executes a load to the compression plates 220, 230 to force them together.

The actuator 100 is pivotally mounted to the piston block 170 via a pivot axle 177. The actuator 100 comprises a cam lever 110 and a locking device 120. The actuator 100 is mounted to the piston block 170 via the cam lever 110. The cam lever 110 has an axis of rotation which provides varying distances to the lower rim 115 thereof so that, depending on the pivoting position of the cam lever 110 with respect to the axis of the spring housing 190 and piston block 170 the spring 180 is compressed to a varying degree and a force is transmitted to the compression plates 220, 230 to a varying degree, so that the distance between the compression plates 220, 230 varies depending on the position of the cam lever 110 and the sealant members 21 a, 21 b, 21 c, 21 d are squeezed to a larger or lesser degree or are not squeezed.

The cam lever 110 comprises a first portion 111 and a second portion 112. The first portion forms a handle 111 and the second portion 112 is connected to the piston block 170 by the pin 177. In one embodiment, the first portion 111 is angled about 90 degrees, or in the range of 70-110 degrees relative to the second portion 112. The angled configuration allows the first portion 111 to overhang (i.e., be positioned adjacent to) the main body (base 2 and cover 3) of the housing when the cam lever 110 is in the actuating position A1. This allows the locking device 120 to connect with the catch member 160 (i.e., flexible latch) to lock the cam lever 110 in the actuating position A1. However, it also provides a compact configuration where the handle 111 engages or is in close proximity to a major side of the housing body thereby reducing the likelihood of the handle being inadvertently bumped or displaced (the main body of the housing at least partially shields the handle). It also provides effective leverage without projecting a significant distance from the main body of the housing in an axial direction when in the non-actuating position A2. Thus, the bent handle configuration has advantages even in the absence of the locking device 120.

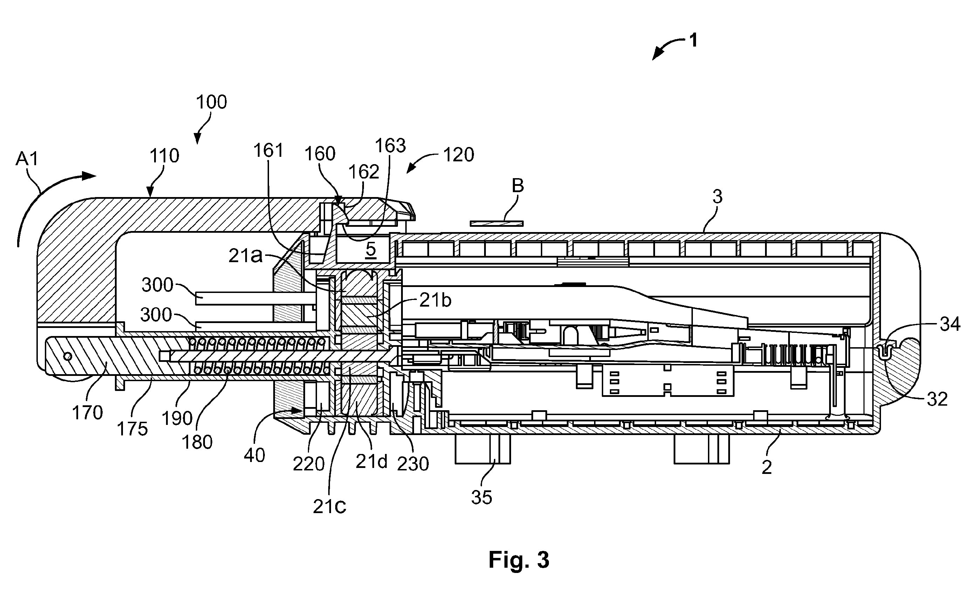

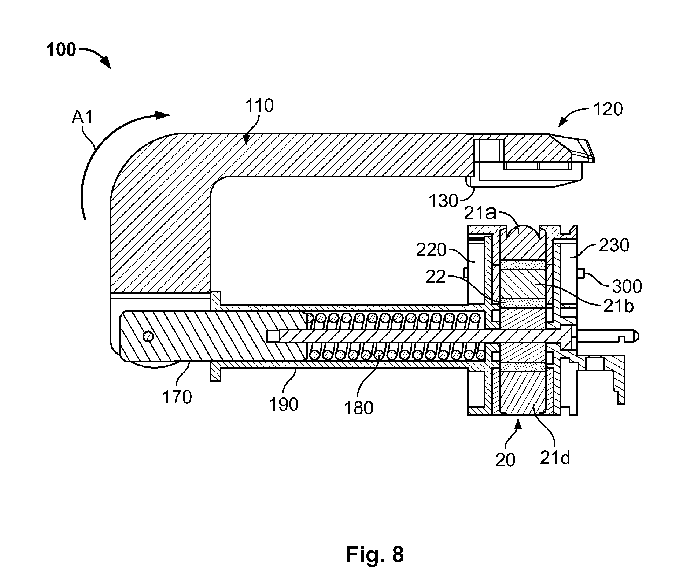

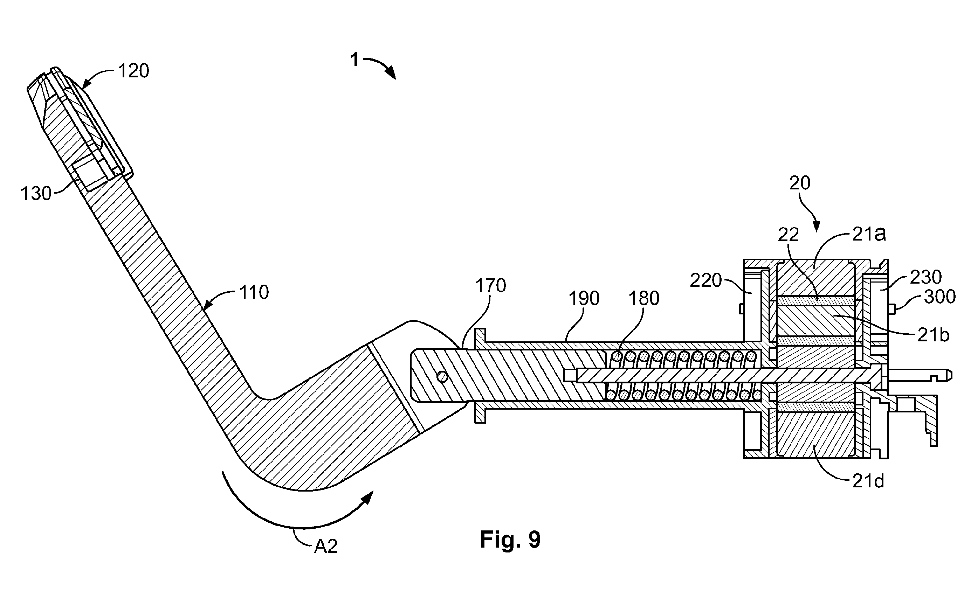

As shown in Figures 8 and 9, depending on the position of the cam lever 100 (which is in Figure 8 in the actuating position A1 and which is in Figure 9 in the non-actuating position A2) the compression plates 220, 230 are compressing the cable sealant members 21 a, 21 b, 21 c, 21 d (actuating position A1 of the actuator 100) or they do not compress the cable sealant members 21 a, 21 b, 21 c, 21 d (non-actuating position A2 of the actuator 100). The uppermost cover sealant member 21a and the lowermost cover sealant member 21 d reach due to the compression thereof the upper or lower edges, respectively, of the compression plates 220, 230 and abut in this position the base 2 or cover 3, respectively, of the enclosure 1 to seal the interior 4 thereof in the opening 40 (refer in this respect to Figure 3).

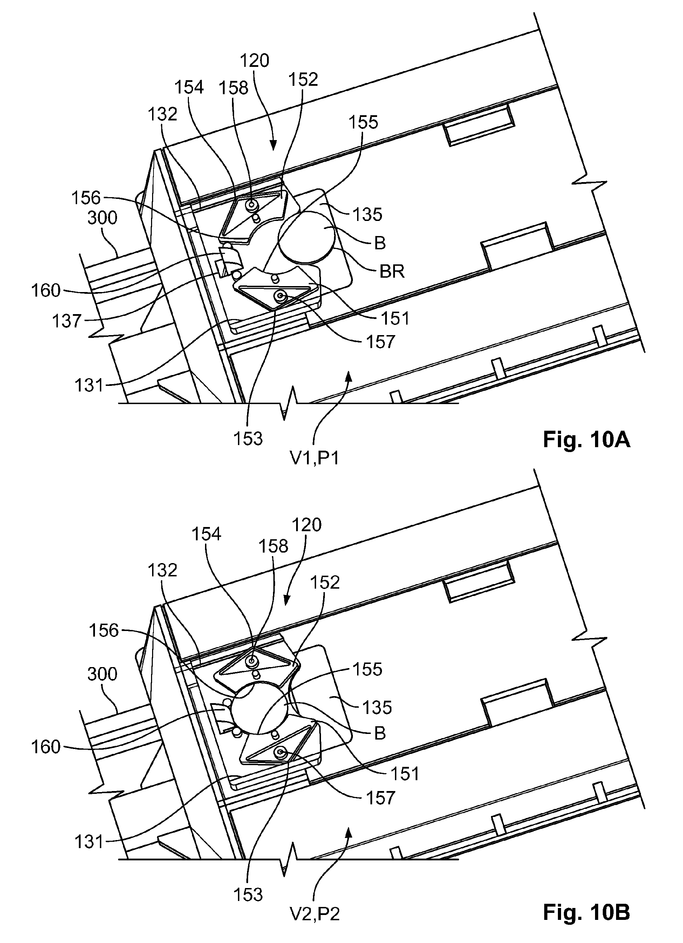

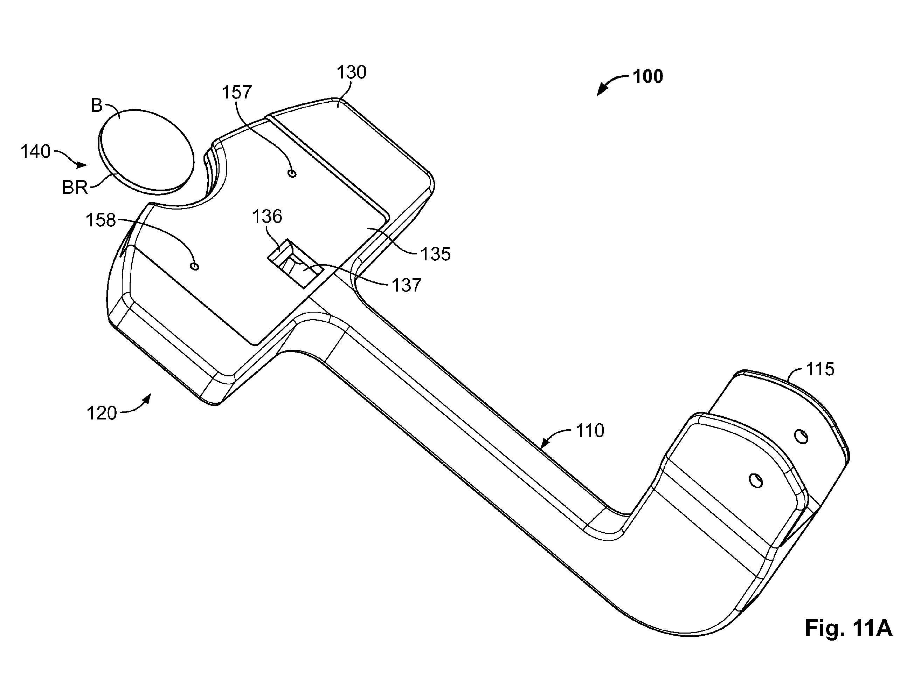

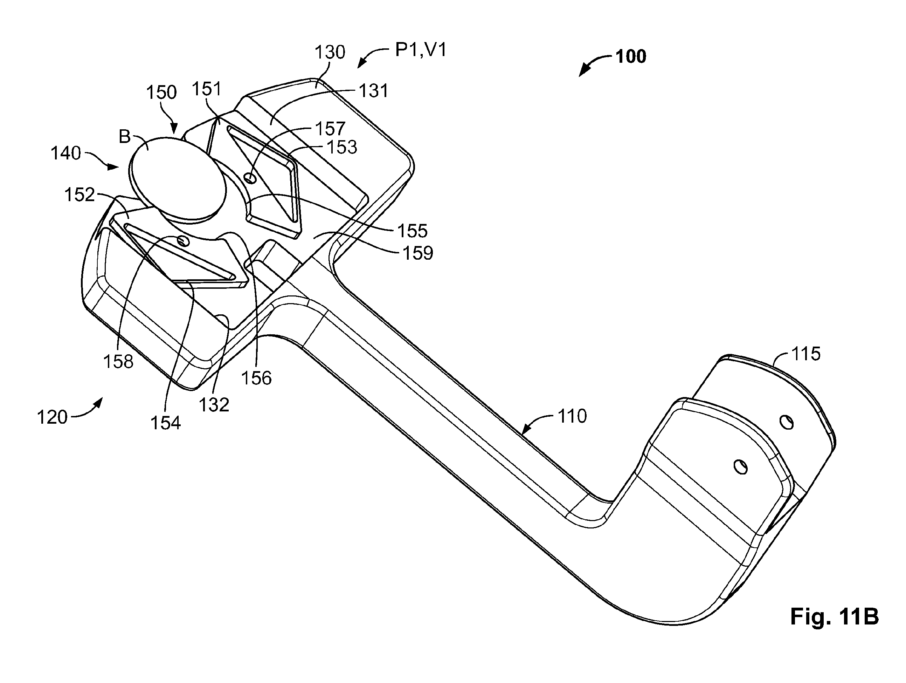

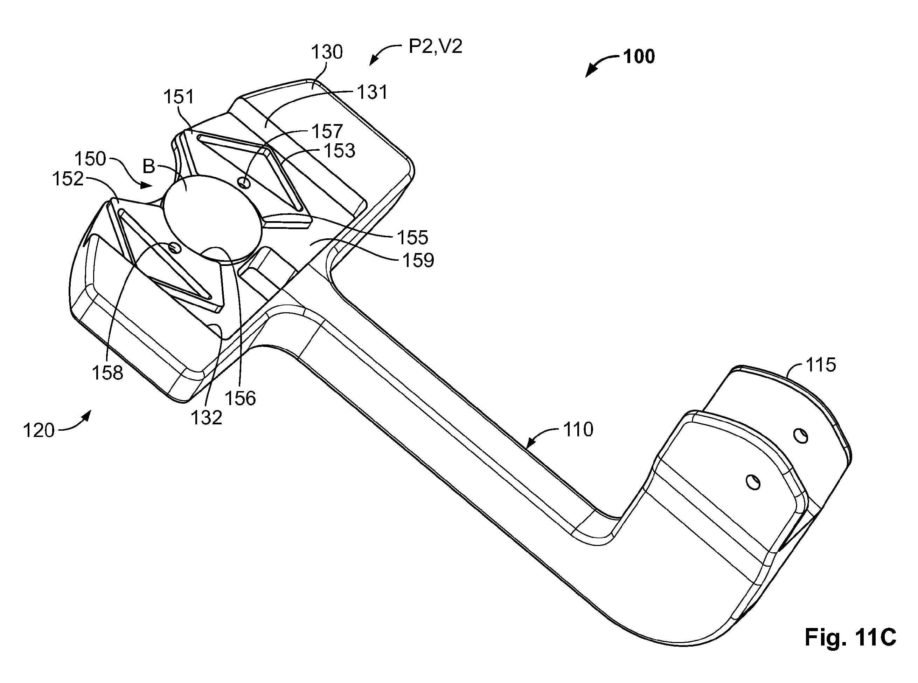

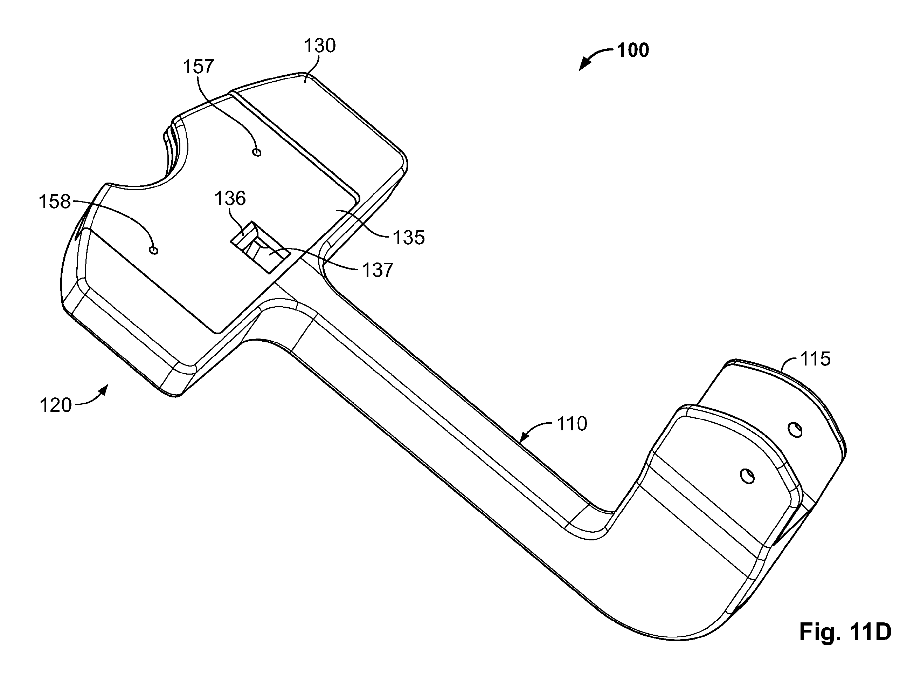

Referring now to Figures 10 and 11, the cam lever 110 has a locking device 120 on one of its ends. The locking device 120 comprises a lock housing 130 which is mounted to or is integral (both parts being made of one piece) with the end of the cam lever 110 which is opposite to the end which is mounted to the piston block 130. The locking device 120 is configured to cover part of the cover 3 in the locked stated so that the cover 3 cannot be opened in this position.

The lock housing 130 has an interior region being defined by a base plane 159, a mounting plate 135, an opening for insertion 140, two lateral side walls 131, 132, and a rear side wall. The interior region accommodates a receiving seat 150 which includes two holding members 151, 152. The holding members 151, 152 are mounted to the mounting plate 135 which is removable from the lock housing 130 (being attached by snap-fitting for example) and which is perpendicular to the plane of the pivoting movement of the cam lever 110. This mounting plate 135 is substantially parallel to the plane of the upper side of the cover 3 when it is in the closed position.

The holding members 151, 152 are configured to fit to part of the border BR of the valuable article which is in this case a coin B. Therefore, the holding members 151, 152 are each configured on one abutting rim 155, 156 thereof to form a concave shape. These concave shaped abutting rims 155, 156 of the holding members 151, 152 firmly embrace the coin B when it is inserted into the lock housing 130. Any other valuable article having another shape would of course require a respective other shape of the holding members to fit to the valuable article. In addition, the holding members 151, 152 are pivotally moveable on the mounting plate 135 such that a first clearance is created between the front ends of the abutting rims 155, 156 in one of the pivoting positions, which is the locking position P1, such that the coin B may be inserted through this first clearance into the spacing between the two holding members 151, 152. If the holding members 151, 152 are moved to the other pivoting position, which is the unlocking position P2, a respective second clearance between the rear ends of the abutting rims 155, 156, though being smaller than the first clearance, is created on the opposite side of the receiving seat 150. Thus the holding members 151, 152 may toggle between these two pivoting positions P1, P2 due to the pivoting movement. The holding members 151, 152 are furthermore configured on their respective rims opposite to the abutting rims 155, 156 to form a bump 153, 154. These bumps 153, 154 engage with the respective lateral side walls 131, 132 of the interior region of the lock housing 130 when they move from one position to the other. This is accomplished by setting the distance between the axis of rotation of each holding member 151, 152 and the respective bump 153, 154 to be slightly larger than the distance between the pivots 157, 158 mounted on the mounting plate 135 and the respective lateral side wall 131, 132. The bumps 153, 154 will then upon pivoting move along the respective side wall 131, 132 experiencing friction so that the holding members 151, 152 lock in the respective positions, namely the locking position P1 and the unlocking position P2.

Further referring to Figure 10, the lock housing 130 furthermore has two positive stops 133 located on the mounting plate 135 which is preferably integral (both parts being made of one piece) with the mounting plate 135. It is located nearby the opening 137 in the mounting plate 135 outside an area (projection) which is covered by the coin B when it is moved to the insertion position V2 and directly abuts this area (refer to Figure 10 b). The insertion position V2 of the coin B is defined to cover the area of the coin B when it is in this position to also abut a border 136 of the opening 137 in the mounting plate 135 which serves to engage the catch member 160 or it slightly protrudes over this border 136. By allowing this area abutting the border 136 or protruding over this border 136 the coin B will be able to deflect and disengage the catch member 160 (see below).

The mounting plate 135 forms part of the lock housing 130 by closing the interior region of it. It is in an orientation parallel to the orientation of the base plane 159. The opening 137 of the mounting plate 135 is located about beneath (or above) a location where the second clearance is created between the holding members 151, 152.

Furthermore, returning to Figure 3, a catch member 160 is provided on the cover 3 of the enclosure 1, this catch member 160 being integral with (both parts being made of one piece) or mounted to the upper side of the cover 3 at a position where it may protrude through the opening 137 in the mounting plate 135 when the cam lever 110 is pivoted over the cover 3 and the actuator 100 is in the actuating position A1. The catch member 160 has a shaft 161 and a head at its free end, wherein this head has a ramp 162 and a click (snap) 163. The catch member 160 is mounted in a recessed region 5 in the cover 3.

In the locked state the actuator 100 is pivoted by pivoting the cam lever 110 such that the lock housing 130 lies against the upper side of the cover 3. In this position of the actuator 100 (actuating position A1), the catch member 160 protrudes through the opening 137 which is formed in the mounting plate 135 of the lock housing 130. In this position the catch member 160 engages with (or behind) the border 136 of the opening 137 such that the locking device 120 and consequently the cam lever 110 are fixed to the cover 3 of the enclosure 1. In order to unlock the locking device 120, a person inserts a coin B through the opening 140 into the lock housing 130. The coin B is received between the holding members 151, 152 and moves inside the lock housing 130 parallel with the mounting plate 135 and base plane 159. Due to the insertion of the coin B the holding members 151, 152 pivot about their axis of rotation 157, 158 and move from their initial locking position P1 to the unlocking position P2 which is characterized by a greater second clearance than the first clearance. When the coin B has reached its insertion position V2 it abuts the ramp 162 of the catch member 160 and biases the catch member 160 in a direction against the engagement thereof with (or behind) the border 136 of the opening 137. Due to the biasing of the catch member 160 the catch member is deflected and disengages from the mounting plate 135 so that the actuator 100 is unlocked and consequently reaches a position which allows it to be moved to the non-actuating position A2. This non-actuating position A2 is achieved when the cam lever 110 is pivoted about its axis of rotation about the pivot axle 177 until the cover 3 is no longer blocked and can be opened (refer to Figure 1 with the cover 3 still being closed and Figure 4 with the cover 3 being opened). In this insertion position V2 the coin B is locked in the lock housing 130 because the receiving seat 150 is engaged to be locked in its unlocking position P2. This is because the bumps 153, 154 of the holding members 151, 152 frictionally engage the lateral side walls 131, 132 so that they cannot easily move to the locking position P1. As the head of the catch member 160 has been withdrawn from the interior region of the lock housing 130 it cannot push the coin B out of the lock housing 130.

In the non-actuating position A2, the actuator 100 releases the compression plates 220, 230 of the cable sealing device 20 so that the cables 300 may move freely in their respective cable passages 22 formed by the cable sealant members 21 a, 21 b, 21 c, 21 d.

If the cover 3 of the enclosure 1 is to be closed again and to be locked and the cable sealing device 20 be caused to seal the enclosure 1, the actuator 100 is pivoted back so that the locking device 120 finally lies against the upper side of the cover 3. Upon exerting a normal force on the locking device 120 towards the cover 3 of the enclosure 1 the ramp 162 causes the catch member 160 to deflect and to snap behind the border 136 of the opening 137 so that the locking device 120 is again locked. In this position the catch member 160 protrudes through the opening 137 of the mounting plate 135 and engages behind the border 136. Furthermore, the ramp 162 of the catch member 160 causes the coin B to be displaced in a direction away from the opening 137 to the ejection position V1 and accordingly pivots the holding members 151, 152 so that the receiving seat 150 is moved to the locking position P1. Consequently a greater first clearance is created by the holding members 151, 152 in this position so that the coin B may pass through this clearance and is ejected from the lock housing 130. Then it may be received by the operating person. When the coin B is finally ejected the locking device 120 and the enclosure 1 are securely locked.

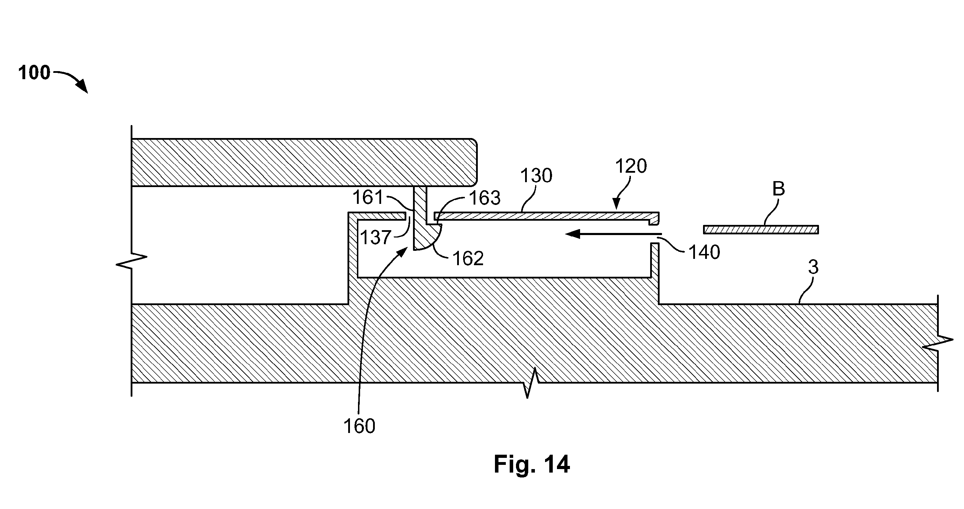

In an alternative embodiment the locking device 120 may, instead of by the actuator 100, be comprised by the cover 3 of the enclosure 1. Figure 14 shows a cross-sectional view of a locking device 120 being integrated into the cover 3. The lock housing 130 of the locking device 120 is part of the cover 3. In this case the catch member 160 engaging the locking device 120 is mounted to the actuator 100. The catch member 160 penetrates an opening 137 in the lock housing 130 and engages with the lock housing 130.

### Reference Signs

- 1: telecommunications enclosure
- 2: base
- 3: cover
- 4: interior
- 5: recessed region
- 6: latch
- 7: latch
- 10: cable sealing arrangement
- 20: cable sealing device
- 21 a: cable sealant member
- 21 b: cable sealant member
- 21 c: cable sealant member
- 21 d: cable sealant member
- 22: cable passages
- 23: top part perimeter casing
- 24: bottom part perimeter casing
- 31: upper rim sections
- 32: groove
- 33: lower rim sections
- 34: ridge
- 35: tab
- 36: hole
- 40: opening
- 51: cable holder
- 52: fiber optic adapter
- 53: splice section
- 100: actuator
- 110: cam lever
- 111: handle
- 112: connection to piston block
- 115: lower rim
- 120: locking device
- 130: lock housing
- 131: side wall
- 132: side wall
- 133: positive stop
- 135: mounting plate
- 136: border
- 137: opening
- 140: opening for insertion
- 150: receiving seat
- 151: holding member
- 152: holding member
- 153: bump
- 154: bump
- 155: abutting rim
- 156: abutting rim
- 157: pivot
- 158: pivot
- 159: base plane
- 160: catch member
- 161: shaft
- 162: ramp
- 163: click
- 170: piston block
- 175: bolt
- 177: pivot axle
- 180: spring
- 190: spring housing
- 220: compression plate
- 230: compression plate
- 300: cable
- A1: actuating position
- A2: non-actuating position
- B: valuable article
- BR: border
- P1: locking position
- P2: unlocking position
- V1: ejection position
- V2: insertion position

## Claims

1. A telecommunications enclosure (1) comprising:
a base (2),
a moveable cover (3), wherein the base (2) and the cover (3) define an enclosed interior (4), wherein the cover (3) is moveable to access the interior (4) of the enclosure (1), and an actuator (100), the actuator (100) being moveable between an actuating position (A1) and a non-actuating position (A2) and, in its actuating position (A1), locking the cover (3) in a closed position, the actuator (100) comprising a locking device (120) or the cover (3) comprising the locking device (120) for locking the actuator (100) in the actuating position (A1),
wherein the locking device (120) includes a lock housing (130) having an opening for insertion (140) of a valuable article (B) to the lock housing (130) and a receiving seat (150) for accommodating the valuable article (B), the receiving seat (150) being moveable between an unlocking position (P2) in which the valuable article (B) is in an insertion position (V2) and a locking position (P1) in which the valuable article (B) is in an ejection position (V1), and wherein the lock housing (130) is engageable with a catch member (160) to fasten the actuator (100) in the actuating position (A1) while the receiving seat (150) is in the locking position (P1).

2. The telecommunications enclosure (1) of claim 1, wherein the receiving seat (150) includes at least one holding member (151, 152) which is formed to at least partially embrace the valuable article (B) once it is inserted to the lock housing (130) and which is pivotally mounted to be moveable between the unlocking position (P2) and the locking position (P1).

3. The telecommunications enclosure (1) of any one of the preceding claims, wherein the receiving seat (150) includes two holding members (151, 152) which each engage the lock housing (130) while pivoting to move the valuable article (B) between the insertion position (V2) and the ejection position (V1).

4. The telecommunications enclosure (1) of claim 3, wherein the holding members are plates (151, 152) which are formed to fit to at least part of a rim (BR) of the valuable article (B) and wherein each plate (151, 152) has a bump (153, 154) which engages with a respective side wall (131, 132) of the lock housing (130) while the holding members (151, 152) are caused to move pivotally.

5. The telecommunications enclosure (1) of any one of the preceding claims, wherein the lock housing (130) further comprises at least one positive stop (133) preventing the valuable article (B) from being inserted to the lock housing (130) beyond a predetermined depth.

6. The telecommunications enclosure (1) of any one of the preceding claims, wherein the catch member (160) is moveable between a biased position (C2) and a non-biased position (C1), the catch member (160) engaging the lock housing (130) when it is in the non-biased position (C1).

7. The telecommunications enclosure (1) of claim 6, wherein the catch member (160) is moveable to the biased position (C2) by inserting the valuable article (B) to the lock housing (130) and moving the catch member (160) by means of the valuable article (B) to the biased position (C2).

8. The telecommunications enclosure (1) of any one of the preceding claims, wherein the enclosure (1) further comprises at least one latch (6, 7), the at least one latch (6, 7) overlapping the cover (3) to lock the cover (3) in a closed position and wherein the actuator (100) overlaps the at least one latch (6, 7) to lock the at least one latch (6, 7) in a closed position.

9. The telecommunications enclosure (1) of any one of the preceding claims, wherein it further comprises a cable sealing device (20) including a cable sealant (21 a, 21 b, 21 c, 21 d) being compressible such that the cable sealant (21 a, 21 b, 21 c, 21 d) upon compression thereof is adapted to form a seal about a cable (300) routed through the cable sealant (21 a, 21 b, 21 c, 21 d), wherein the cable sealant (21 a, 21 b, 21 c, 21 d) is in a compressed position (S1) when the actuator (100) is in the actuating position (A1) and is in a non-compressed position (S2) when the actuator (100) is in the non-actuating position (A2).

10. The telecommunications enclosure (1) of claim 9, wherein the cable sealant (21 a, 21 b, 21 c, 21 d) is positioned between first and second compression plates (220, 230), which are compressed together to deform the cable sealant (21 a, 21 b, 21 c, 21 d) while the actuator (100) is in the actuating position (A1).

11. The telecommunications enclosure (1) of claim 10, wherein the actuator (100) further comprises a cam lever (110), wherein the cam lever (110) is moveable so that the actuator (100) is moved between an actuating position (A1) and a non-actuating position (A2), the cam lever (110) is pivotally mounted to an axially moveable piston block (170) and is adapted to apply a load to the piston block (170) which compresses the first and second compression plates (220, 230) together while the actuator (100) is in the actuating position (A1).

12. A cable sealing arrangement (10) for providing a seal of a telecommunications enclosure (1) in a closed position, the enclosure (1) comprising a base (2) and a moveable cover (3), the base (2) and the cover (3) defining an enclosed interior (4) and the cover (3) being moveable to access the interior (4) of the enclosure (1), wherein the cable sealing arrangement (10) comprises an actuator (100) and a cable sealing device (20), the actuator (100) including a locking device (120) or the cover (3) including the locking device (120), wherein further the actuator (100) is connected to the cable sealing device (20), and wherein the actuator (100) is fastened by the locking device (120) in an actuating position (A1) and locks, in its actuating position (A1), the enclosure (1) in a closed position and causes the cable sealing device (20) to seal the enclosure (1), wherein the locking device (120) includes:
a lock housing (130) having an opening (140) for insertion of a valuable article (B) to the lock housing (130), and
a receiving seat (150) for accommodating the valuable article (B), the receiving seat (150) being moveable between an unlocking position (P2) in which the valuable article (B) is in an insertion position (V2) and a locking position (P1) in which the valuable article (B) is in an ejection position (V1),
wherein the lock housing (130) is engageable with a catch member (160) to lock the actuator (100) in the actuating position (A1) while the receiving seat (150) is in the locking position (P1).

13. The cable sealing arrangement (10) of claim 12, wherein the actuator (100) further includes a cam lever (110) which is pivotally moveable to move the actuator (100) between the actuating position (A1) and the non-actuating position (A2) and wherein the actuator (100) in its actuating position (A1) locks the cover (3) in the closed position.

14. A method of locking a cable sealing arrangement (10) of a telecommunications enclosure (1) of claims 1-11, wherein the enclosure (1) has a base (2), a moveable cover (3) and an actuator (100), the actuator (100) having a locking device (120) being mounted at one of the ends of the actuator (100), wherein the actuator (100) is moveable between an actuating position (A1) and a non-actuating position (A2) and wherein the actuator (100) in its actuating position (A1) locks the cover (3) in a closed position and causes the cable sealing arrangement (10) to seal the enclosure (1), the locking device (120) comprising a lock housing (130) and a receiving seat (150) which is moveable between an unlocking position (P2) and a locking position (P1), and wherein the telecommunications enclosure (1) further comprises a catch member (160), the method comprising locking the actuator (100) by:
(a) snapping the actuator (100) on the cover (2) and moving the catch member (160) from the non-engaged position (C2) to the engaged position (C1),
(b) moving the valuable article (B) from the insertion position (V2) to the ejection position (V1) and moving the receiving seat (150) from the unlocking position (P2) to the locking position (P1), and
(c) ejecting the valuable article (B) from the locking device (120).

15. A method of unlocking a cable sealing arrangement (10) of a telecommunications enclosure (1) of claims 1-11, wherein the enclosure (1) has a base (2), a moveable cover (3) and an actuator (100), the actuator (100) having a locking device (120) being mounted at one of the ends of the actuator (100), wherein the actuator (100) is moveable between an actuating position (A1) and a non-actuating position (A2) and wherein the actuator (100) in its non-actuating position (A1) unlocks the cover (2) in an open position and causes the cable sealing arrangement (10) to be released, the locking device (120) comprising a lock housing (130) and a receiving seat (150) which is moveable between an unlocking position (P2) and a locking position (P1), and wherein the telecommunications enclosure (1) further comprises a catch member (160), the method comprising unlocking the the actuator (100) by:
(a) inserting a valuable article (B) to the locking device (120),
(b) moving the receiving seat (150) from the locking position (P1) to the unlocking position (P2) by moving the valuable article (B) from an ejection position (V1) to an insertion position (V2), and
(c) moving the catch member (160) from an engaged position (C1) to a non-engaged position (C2) and unlocking the locking device (120) and accordingly the actuator (100).
